Europäisches Patentamt

European Patent Office

Office européen des brevets

(11) Veröffentlichungsnummer: **0 392 050 B1**

## (12) EUROPÄISCHE PATENTSCHRIFT

(45) Veröffentlichungstag der Patentschrift: **16.03.94**

(21) Anmeldenummer: **89106522.9**

(22) Anmeldetag: **12.04.89**

(51) Int. Cl.⁵: **G11B 20/10**, G11B 5/02

## (54) Verfahren und Einrichtung zum Aufzeichnen von Dateninformation auf einem magnetischen Aufzeichnungsträger.

(43) Veröffentlichungstag der Anmeldung:
**17.10.90 Patentblatt 90/42**

(45) Bekanntmachung des Hinweises auf die
Patenterteilung:
**16.03.94 Patentblatt 94/11**

(84) Benannte Vertragsstaaten:
**DE FR GB**

(56) Entgegenhaltungen:
**GB-A- 2 102 616**
**GB-A- 2 179 487**
**US-A- 3 564 160**
**US-A- 4 202 017**

**IBM TECHNICAL DISCLOSURE BULLETIN,
Band 14, Nr. 11, April 1972, Seiten 3372-3373;
W.R. HAHS: "Bit displacement compensation
for high-density recording"**

**PATENT ABSTRACTS OF JAPAN, Band 8, Nr.
48 (P-258)[1485], 3. März 1984;& JP-A-58 199
410**

**PATENT ABSTRACTS OF JAPAN, Band 6, Nr.
75 (P-114)[953], 12. Mai 1982;& JP-A-57 12 406**

(73) Patentinhaber: **TANDBERG DATA A/S**
**Kjelsasveien 161**
**Postboks 9 Korsvoll**
**N-0808 Oslo 8(NO)**

(72) Erfinder: **Hardeng, Erik N.**
**Hauges Vei 11 D**
**N-0871 Oslo 8(NO)**

(74) Vertreter: **Goddar, Heinz J., Dr. et al**
**FORRESTER & BOEHMERT**
**Franz-Joseph-Strasse 38**
**D-80801 München (DE)**

## Beschreibung

Die Erfindung bezieht sich auf ein Verfahren zum Aufzeichnen von Dateninformation auf einem magnetischen Aufzeichnungsträger gemäß dem Oberbegriff des Patentanspruches 1 sowie auf eine Einrichtung zur Durchführung dieses Verfahrens.

Es ist bereits allgemein bekannt, bei einer Aufzeichnung von Dateninformation auf einem magnetischen Aufzeichnungsträger, beispielsweise einem Magnetband oder einer Magnetplatte die aufzuzeichnende Dateninformation in Form von binären Datensignalen seriell einem Schreibverstärker zuzuführen. Dieser erzeugt einen den Datensignalen proportionalen Schreibstrom für einen magnetischen Schreibkopf. Für die Darstellung der Dateninformation in Form von binären Datensignalen steht eine Vielzahl von Schreibverfahren, so beispielsweise das NRZ-, das MFM- oder das GCR-Schreibverfahren zur Verfügung.

Wenn der Schreibstrom, wie angedeutet, den Datensignalen direkt proportional ist, so bezeichnet man dies gewöhnlich als direkte Datenaufzeichnung. Bei magnetischen Aufzeichnungen von Analogsignalen, beispielsweise in der Tontechnik, wird jedoch häufig vorgezogen, dem die Nutzinformation darstellenden Analogsignal vorzugsweise höherfrequente Vormagnetisierungssignale zu überlagern. Der Einfluß der Vormagnetisierung auf den eigentlichen Aufzeichnungsvorgang ist komplex und nur modellhaft darstellbar. Hier sei nur angedeutet, daß die remanente Magnetisierung auf dem magnetischen Aufzeichnungsträger möglichst groß und dabei linear-proportional zur Aufzeichnungsfeldstärke sein soll. Bekanntlich ist aber die Magnetisierungscharakteristik üblicher magnetischer Aufzeichnungsmedien in hohem Maße nichtlinear. Mit Hilfe der Vormagnetisierungssignale wird jedoch ein Magnetfeldanteil erzeugt, mit dem es gelingt, den Aufzeichnungsvorgang im Hinblick auf den dem Informationssignal entsprechenden Magnetfeldanteil zu linearisieren. So gelingt es auf dem magnetischen Aufzeichnungsträger mit einem nicht feststellbaren Vormagnetisierungsanteil in Verbindung mit einem dem Informationssignal entsprechenden Magnetfeldanteil einen Magnetisierungswert hervorzurufen, der diesem Informationssignal proportional ist.

Naturgemäß ist eine derartige Linearisierung des magnetischen Aufzeichnungsvorganges bei der Aufzeichnung von analogen Informationssignalen von besonderer Bedeutung, da hiervon die Wiedergabequalität unmittelbar abhängt. Bei der magnetischen Aufzeichnung von Dateninformation in Form von binären Datensignalen ist diese Forderung nach hoher Linearität zunächst weniger kritisch, da hier die Gesamtinformation in Form diskreter Magnetisierungszustände oder genauer noch in Form von Magnetisierungsflußwechseln gespeichert ist. Aus diesem Grunde wird auch heute noch Dateninformation vielfach mit einem direkten Aufzeichnungsverfahren magnetisch aufgezeichnet.

Die magnetische Aufzeichnung von Dateninformation mit Hilfe einer hochfrequenten Vormagnetisierung hat aber auch bei digitaler Datenaufzeichnung Vorteile, insbesondere dann, wenn hohe Aufzeichnungsdichten angestrebt werden, wie dies beispielsweise in US-A-4,202,017 dargelegt ist. Danach treten auch bei digitaler Datenaufzeichnung mit hohen Aufzeichnungsdichten insbesondere beim Lesevorgang Störungen auf, die auf den Einfluß einander benachbarter Flußwechsel zurückzuführen sind. Dies wirkt sich als eine Spitzenwertverschiebung (peak shift) mit entsprechender Verzerrung der Lesesignale aus, wobei auch die Lesesignalamplitude degradieren kann. Nach der bekannten technischen Lehre läßt sich dieser Effekt vermindern, indem man dem Schreibstrom, der den aufzuzeichnenden Datensignalen entspricht, einen Wechselstrom zur Vormagnetisierung überlagert. Dessen Amplitude ist derart gewählt, daß die Magnetisierungsfeldstärke im Aufzeichnungsmedium annähernd gleich seiner Koerzivität ist. Wenn dann die Amplitude für die Datensignalwechsel derart gewählt wird, daß sie im wesentlichen der der Vormagnetisierungssignale entspricht, dann erzeugt die Summe beider Signalamplituden eine Aufzeichnung im Sättigungsbereich.

Ähnliches ist beispielsweise auch aus EP-A1-0 030 644 bekannt. In dem dort beschriebenen magnetischen Speichergerät für digitale Aufzeichnung werden den Datensignalen hochfrequente Vormagnetisierungssignale synchronisiert überlagert. Aufgrund dieser Vormagnetisierung kann die Amplitude der aufzuzeichnenden Datensignale vermindert werden, so daß während des Aufzeichnungsvorganges ein Übersprechen von schreibenden Magnetköpfen auf lesende Magnetköpfe verhindert wird. Weiterhin wird durch diese Vormagnetisierung der Aufzeichnungsvorgang linearisiert, so daß die Änderungen der gelesenen Datensignale, die den Änderungen der Magnetisierung auf dem Aufzeichnungsträger entsprechen, genauer erkannt werden können.

Nun ist es aber so, daß der Effekt der Spitzenwertverschiebung bei einer gegebenen Aufzeichnungsdichte nicht nur von der Amplitude der aufzuzeichnenden Datensignale, d. h. dem Datenschreibstrom in der Weise abhängt, daß die Spitzenwertverschiebung mit wachsenden Signalamplituden ansteigt. Der Effekt der Spitzenwertverschiebung ist vielmehr auch von der Koerzivität des Aufzeichnungsmediums abhängig. Bei dieser Einflußgröße wird die Spitzenwertverschiebung um so geringer, je höher die Koerzivität des Aufzeichnungsmediums ist. Nun ist allerdings die Koerzivität von magnetischen Aufzeichnungsträgern beispielsweise Magnetbändern unterschiedlicher Hersteller nicht einheitlich und nicht einmal notwendigerweise über die gesamte Länge eines Magnetbandes völlig gleichmäßig. Hinzukommt noch, daß die Koerzivität eines magnetischen Aufzeichnungsträgers temperaturabhängig ist, d. h. mit steigender Temperatur absinkt.

Wie vorstehend angedeutet, wird bei jeder Festlegung der Amplituden von Vormagnetisierungssignalen in bezug auf die aufzuzeichnenden Datensignale ein Kompromiß angestrebt, der bei möglichst hoher Aufzeichnungssignalamplitude eine möglichst geringe Spitzenwertverschiebung der Lesesignale ergibt. Wird in einem Speichergerät in dieser Weise einmal das Verhältnis zwischen Vormagnetisierungsstrom und Datenschreibstrom fest eingestellt, dann ist es unvermeidbar, daß der optimale Wert für eine minimale Spitzenwertverschiebung normal nur selten erreicht wird, da der Hersteller des Speichergerätes keinen Einfluß darauf hat, bei welchen Temperaturen mit diesem Gerät auf Aufzeichnungsträger unterschiedlicher Koerzivität aufgezeichnet wird.

Der Erfindung liegt daher die Aufgabe zugrunde, bei einem Verfahren der eingangs genannten Art sowie bei einer Einrichtung zur Durchführung dieses Verfahrens die Voraussetzungen dafür zu schaffen, daß der Einfluß wechselnder Koerzivität des magnetischen Aufzeichnungsträgers minimiert wird.

Diese Aufgabe wird bei einem Verfahren der eingangs genannten Art mit den im Kennzeichen des Patentanspruches 1 beschriebenen Merkmalen gelöst.

Dabei geht die Erfindung von der Erkenntnis aus, daß die gewünschte geringe Spitzenwertverschiebung nicht mit einem fest vorgegebenen Verhältnis zwischen Datenschreibstrom und Vormagnetisierungsstrom zu erreichen ist und löst dieses Problem dadurch, daß dieses Verhältnis in Abhängigkeit von den aktuellen Werten der Einflußgrößen korrigiert wird. Dazu werden zunächst Daten mit einem vorgegebenen Verhältnis von Datenschreibstrom zu Vormagnetisierungsstrom aufgezeichnet. Anschließend werden die aufgezeichneten Daten sofort kontrollgelesen, so daß die Spitzenwertverschiebung der Lesesignale festgestellt werden kann. In Abhängigkeit von der festgestellten Spitzenwertverschiebung wird dann der Datenschreibstrom und/oder der Vormagnetisierungsstrom in der Richtung korrigiert, daß sich die Spitzenwertverschiebung der Lesesignale verringert. Mit anderen Worten, es wird zur Einstellung des Vormagnetisierungsstromes eine Regelschleife verwendet, die derart ausgelegt ist, daß ein vorgegebener Minimalwert für die Spitzenwertverschiebung möglichst weitgehend angenähert kontinuierlich aufrechterhalten wird. Kontinuierlich heißt hier aber vorzugsweise, daß der verhältnismäßig langsame Temperaturgang ausgeregelt wird. Die Regelschleife ist verhältnismäßig träge zu implementieren und soll auf Momentanverschiebungen der Spitzenwerte, d. h. kurzzeitige Phasenablagen (phase jitter) nicht ansprechen.

Ausführungsbeispiele der Erfindung werden im folgenden anhand der Zeichnung näher beschrieben. Dabei zeigt

FIG 1 ein Blockschaltbild für ein Magnetbandgerät zum Aufzeichnen und Wiedergeben von Dateninformation, das eine Regelschleife zum kontinuierlichen Nachregeln eines Vormagnetisierungsstromes aufweist,

FIG 2 ein Schaltbild der wesentlichen Einheiten dieser Regelschleife in analoger Technik,

FIG 3 eine Reihe von Impulsdiagrammen zum Erläutern der Funktion der Schaltungsanordnung nach FIG 2 und

FIG 4 in einem Blockschaltbild eine weitere Ausführungsform für die wesentlichen Einheiten dieser Regelschleife zum Einstellen des Vormagnetisierungsstromes in digitaler Schaltkreistechnik.

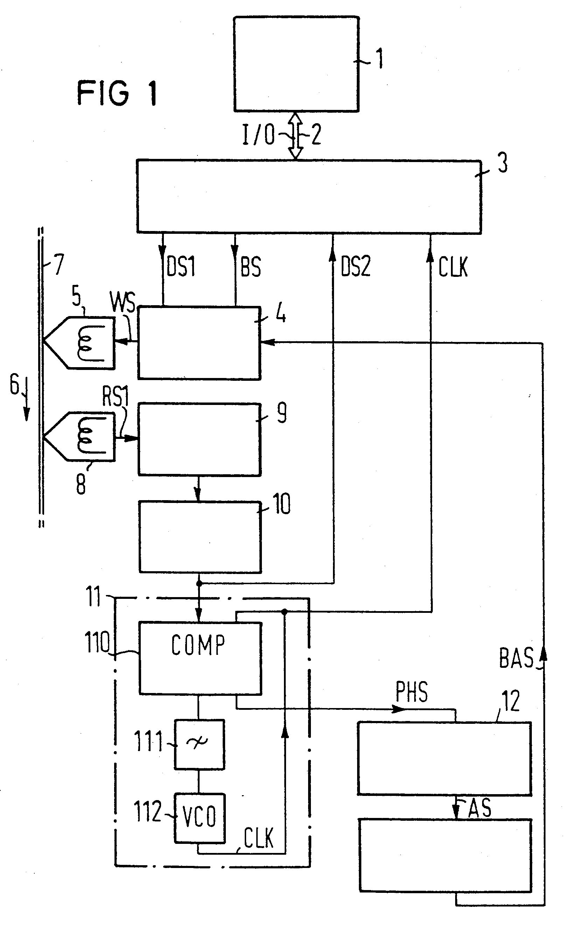

Das in FIG 1 dargestellte Blockschaltbild für ein Magnetbandgerät zum Aufzeichnen und Wiedergeben von Dateninformation zeigt schematisch ein Datenverarbeitungssystem 1, das über einen Datenbus 2 Dateninformation mit einer Gerätesteuerung 3 (formatter) austauscht. Diese Gerätesteuerung 3 dient in bekannter Weise dazu, die Datenübertragung über den Datenbus 2 an den bitseriellen, durch einen internen Takt CLK gesteuerten Datentransport innerhalb des Magnetbandgerätes anzupassen.

Hier sind die an der geräteinternen Schnittstelle der Gerätesteuerung 3 auftretenden Signale nur insoweit angegeben, als dies für den vorliegenden Fall von Interesse ist. Die Gerätesteuerung 3 liefert an eine Schreibelektronik 4, die unter anderem einen steuerbaren Schreibverstärker enthält, in bitserieller Form Schreibsignale DS1, die die binärcodierte Dateninformation darstellen. Außerdem überträgt die Gerätesteuerung 3 hochfrequente Vormagnetisierungssignale BS, die in der Schreibelektronik 4 den Schreibsignalen DS1 synchronisiert überlagert werden, um überlagerte Schreibsignale WS zu erzeugen, die einem als Schreibkopf 5 bezeichneten Magnetkopf zugeführt werden. Aufgrund der dem Magnetkopf 5 zugeführten überlagerten Schreibsignale WS wird in dessen Magnetspule ein Schreibstrom hervorgerufen, der seinerseits in einem an dem Magnetkopf in einer durch einen Pfeil 6 bezeichneten Laufrichtung vorbeilaufenden Magnetband 7 entsprechende Magnetisierungszustände hervorruft, die die aufgezeichnete Dateninformation repräsentieren.

Wie nachstehend noch genauer erläutert wird, besteht der Schreibstrom aus einer schwächeren, durch die Schreibsignale DS1 hervorgerufenen Stromkomponente sowie einer im Verhältnis dazu stärkeren, auf die hochfrequenten Vormagnetisierungssignale BS zurückzuführende Stromkomponente. Das Verhältnis dieser Stromkomponenten ist dabei derart gewählt, daß sich die während des Aufzeichnungsvorganges auf dem Magnetband 7 einstellenden Magnetisierungszustände gegenseitig möglichst wenig beeinflussen, d. h. daß eine möglichst geringe Degradation erfolgt. Mit anderen Worten bedeutet dies wiederum für den Lesevorgang, daß die aus dem Magnetband 7 ausgelesenen Lesesignale bei hohem Störabstand eine möglichst niedrige Spitzenwertverschiebung im Vergleich zu der Impulsfolge der ursprünglichen Schreibsignale DS1 aufweisen.

Für das Lesen der aufgezeichneten Information vom Magnetband 7 ist ein weiterer Magnetkopf, der Lesekopf 8 vorgesehen, in dem den abgetasteten Magnetisierungszuständen auf dem Magnetband 7 entsprechende analoge Lesesignale RS1 induziert werden. Diese werden in einer konventionell ausgeführten Leseelektronik 9 aufbereitet. An die Leseelektronik 9 ist ein Datendetektor 10 angeschlossen, der die in der Leseelektronik aufbereiteten analogen Lesesignale RS1 in pulsförmige Datenlesesignale DS2 umformt.

Diese Datenlesesignale DS2 werden der Gerätesteuerung 3 als bitserielle Dateninformation zugeführt und dort in ein Format umgesetzt, in dem sie über den Datenbus 2 als Ausgabedaten an das Datenverarbeitungssystem 1 übertragen werden können.

Weiterhin werden die Datenlesesignale DS2 einem Phasenregelkreis 11 zum Rückgewinnen des Datentaktes zugeführt. Der Phasenregelkreis 11 weist als Eingangsschaltung einen Phasenkomparator 110 auf. Daran angeschlossen ist ein Schleifenfilter 111 sowie ein spannungsabhängig gesteuerter Oszillator 112. Dieser Oszillator liefert das interne Taktsignal CLK, das parallel sowohl der Gerätesteuerung 3 als auch dem Phasenkomparator 110 als Eingangssignal zugeführt wird. Der Phasenkomparator 110 vergleicht die beiden ihm zugeführten Signale und gibt bei einer Phasenablage der beiden Signalimpulsfolgen über das Schleifenfilter 111 an den spannungsabhängig gesteuerten Oszillator 112 ein entsprechendes Steuersignal ab, das dessen Phase und gegebenenfalls Frequenz nachregelt, um die internen Taktsignale CLK an die momentane Phase der Datenlesesignale DS2 anzupassen.

Soweit bisher beschrieben, entspricht die in FIG 1 dargestellte Ausführungsform für ein Magnetbandgerät zum Aufzeichnen und Wiedergeben von digitaler Dateninformation völlig konventionellen Lösungen, so daß hier eine über dieses Blockschaltbild von FIG 1 hinausgehende Detailbeschreibung des Magnetbandgerätes nicht erforderlich erscheint. Die vorstehende Beschreibung wurde deshalb nur deswegen in dieser Form gegeben, damit der Gesamtzusammenhang der Erfindung eindeutig zum Ausdruck kommt und auch illustriert wird, inwieweit ein konventioneller Aufbau für ein Magnetbandgerät verwendet werden kann, um die gewünschten Funktionen auszuführen.

Zusätzlich werden nun die vom Phasenkomparator 110 abgegebenen Signale in Form von Phasenimpulsen PHS einer Meßeinrichtung 12 zugeführt. Dabei entspricht die Pulsdauer der Phasenimpulse PHS der zeitlichen Ablage der dem Phasenkomparator 110 zugeführten Datensignale DS2 in bezug auf die internen Taktsignale CLK. Die Meßeinrichtung 12 dient dazu, die Pulsdauer dieser Phasenimpulse PHS zu messen, wobei das Meßergebnis in Form eines Steuersignales AS einer Steuereinheit 13 für den Vormagnetisierungsstrom zugeführt wird. Nach Maßgabe einer noch im einzelnen zu erläuternden Beziehung leitet diese Steuereinheit 13 aus dieser Eingangsgröße ein Steuersignal BAS zum Einstellen des Vormagnetisierungsstromes ab, das der Schreibelektronik 4 zugeführt wird und dort gegebenenfalls eine Anpassung der Verstärkung für die hochfrequenten Vormagnetisierungssignale BS bewirkt.

Mit dieser anhand von FIG 1 geschilderten Schaltungsanordnung ist demnach folgendes Aufzeichnungsverfahren möglich: Der Schreibelektronik 4 des Magnetbandgerätes werden zunächst die bitseriellen Datenschreibsignale DS1 und die hochfrequenten Vormagnetisierungssignale BS mit vorgegebenen Signalamplituden zugeführt. Mit einem zunächst vorgegebenen Verhältnis der Signalamplituden werden dort die Datenschreibsignale DS1 den hochfrequenten Vormagnetisierungssignalen BS synchronisiert überlagert und auf dem Magnetband 7 entsprechende Magnetisierungszustände erzeugt. Aus diesen werden unmittelbar nach dem Aufzeichnen durch Kontrollesen die Datenlesesignale DS2 generiert.

Da der Aufzeichnungsvorgang und der anschließende Lesevorgang gesteuert durch die interne Taktsignalfolge CLK gesteuert wird, dürfte im Idealfall zwischen den Datenschreibsignalen DS1 und den Datenlesesignalen DS2 keine Phasenverschiebung auftreten. Wenn der Phasenkomparator 110 dennoch Phasenablagen feststellt, so ist dies dann im wesentlichen auf störende Einflüsse beim Aufzeichnungsvorgang zurückzuführen. In der Meßeinrichtung 12 werden diese Spitzenwertverschiebungen ausgemessen und die Meßwerte in der Steuereinheit 13 in ein Steuersignal BAS zum Korrigieren des Vormagnetisierungsstromes in der Schreibelektronik 4 umgeformt. Die Umformung kann eine Begrenzung des Steuersignals vorsehen, so daß der Vormagnetisierungsstrom nur innerhalb eines vorgegebenen Bereiches veränderbar ist.

Die Schreibelektronik 4 in Verbindung mit dem Schreibkopf 5 so wie der Lesekopf 8 mit der angeschlossenen Leseelektronik 9, der Datendetektor 10, der Phasenkomparator 110, die Meßeinrichtung 12 und die Steuereinheit 13 bilden damit einen Regelkreis zur Regelung des Vormagnetisierungsstromes in Abhängigkeit von aktuellen Parametern, insbesondere der Koerzivität des Magnetbandes 7 sowie der momentanen Temperatur im Magnetbandgerät. Damit gelingt es beim Aufzeichnungsvorgang unabhängig von der Betriebstemperatur bzw. von einer Variation der Koerzivität einzelner Magnetbänder Magnetisierungszustände auf dem Magnetband 7 hervorzurufen, aus denen dann bei einem späteren Lesevorgang Datenlesesignale DS2 wiedergewonnen werden, deren Spitzenwertverschiebung auf einem geringen Optimalwert gehalten wird. Dieser Optimalwert der momentanen Phasenverschiebung beruht auf kurzzeitigen Einflüssen, wie z. B. der gegenseitigen Beeinflussung benachbarter Magnetisierungswechsel und ist deshalb bei vorgegebenen Aufzeichnungsverfahren systematisch nicht eliminierbar.

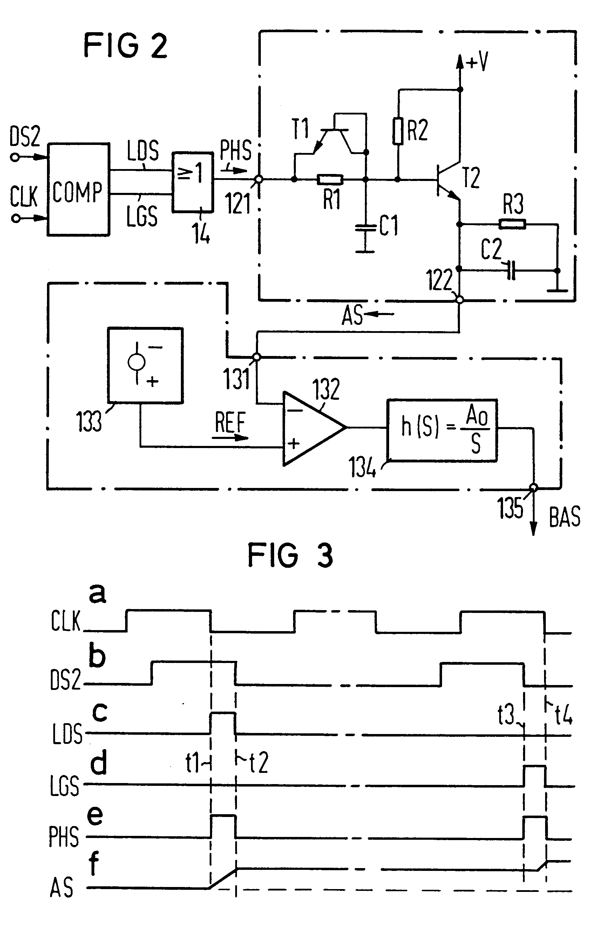

In FIG 2 ist ein Ausführungsbeispiel für die Phasenmeßeinrichtung 12 sowie die Steuereinheit 13 für den Vormagnetisierungsstrom in analoger Schaltungstechnik dargestellt. Um den Zusammenhang mit FIG 1 herzustellen, ist in FIG 2 nochmals der Phasenkomparator 10 gezeigt, dem die Datenlesesignale DS2 sowie die internen Taktsignale CLK als zu vergleichende Signale zugeführt werden. Konventionelle Phasenkomparatoren für die hier in Frage kommenden Phasenregelkreise geben Ausgangssignale ab, die den Phasenunterschied nach Größe und Richtung repräsentieren. Eilt die interne Taktsignalfolge CLK der Datenlesesignalfolge DS2 voraus, so gibt der Phasenkomparator 110 ein vorauseilendes Phasensignal LDS (LEAD Signal) ab, dessen Pulsbreite dem momentanen Phasenunterschied zwischen den Eingangssignalen des Phasenkomparators 110 entspricht. Im umgekehrten Fall, d. h. bei nacheilender interner Taktsignalfolge CLK, wird ein nacheilendes Phasensignal LGS (LAG Signal) mit entsprechender Impulsbreite erzeugt. Da diese Funktion des Phasenkomparators 110 völlig im konventionellen Rahmen liegt, ist er in FIG 2 auch lediglich als Block angegeben.

Im Gegensatz zu der Signalverarbeitung im konventionellen Phasenregelkreis spielt für den vorliegenden Anwendungsfall die Richtung der Phasenabweichung zwischen den Datenlesesignalen DS2 und der internen Taktsignalfolge CLK keine Rolle. Deswegen werden beide Phasensignale LDS bzw. LGS über ein ODER-Glied 14 verknüpft, das damit die lediglich den Betrag des momentanen Phasenunterschiedes repräsentierende Phasenimpulse PHS abgibt. Es sind allerdings auch Phasenkomparatoren bekannt, bei denen im Schaltkreis selbst diese logische Verknüpfung bereits vorgenommen wird, dann erübrigt sich das ODER-Glied.

Diese Phasenimpulse PHS sind also unipolare, pulsbreitenmodulierte Signale, deren Impulsbreite der momentanen Spitzenwertverschiebung der ausgewerteten analogen Lesesignale RS1 entsprechen. Dieser Istwert für die momentane Phasenablage wird der Phasenmeßeinrichtung 12 zugeführt, die als Pulsbreitendetektor ausgebildet ist. Zwischen dessen Signaleingang 121 und Masse ist ein RC-Glied in Form eines ersten ohmschen Widerstandes R1 und eines ersten Kondensators C1 angeordnet. Dem ersten ohmschen Widerstand R1 ist eine Diode, hier in Form der Emitter-Kollektordiode eines ersten Transistors T1, parallel geschaltet, die dazu dient, den ersten Kondensator schnell entladen zu können.

An den Verbindungspunkt zwischen dem ersten Widerstand R1 und dem ersten Kondensator C1 ist die Basis eines weiteren Transistors T2 angeschlossen, die über einen weiteren Widerstand R2, den Basiswiderstand zusammen mit dem Kollektor des zweiten Transistors T2 an positive Betriebsspannung + V gelegt ist. An den Emitter des zweiten Transistors T2 ist ein weiteres RC-Glied angeschlossen. Dieses besteht aus einer Parallelschaltung eines weiteren ohmschen Widerstandes R3 und eines zweiten Kondensators C2, die zwischen dem Emitter des zweiten Transistors T2 und Masse angeordnet ist. Der Emitter des zweiten Transistors T2 ist mit einem Signalausgang 122 des Pulsbreitendetektors 12 verbunden.

Die geschilderte Ausgangsstufe des Pulsbreitendetektors ist demnach ein Emitterfolger mit einem RC-Glied im Emitterzweig, dessen Dimensionierung die Integrationsfunktion des Pulsbreitendetektors 12 bestimmt. Der zweite Transistor T2 dient als Sperrglied, um eine unerwünschte Entladung des zweiten Kondensators C2 zu vermeiden. An sich könnte dafür ebenso eine Diode verwendet werden, der Transistor T2 ermöglicht aber zusätzlich eine Impedanzwandlung, so daß deswegen der zweite Kondensator C2 größer dimensioniert werden kann. Damit wird die Zeitkonstante des zweiten RC-Gliedes R3, C2 entsprechend groß. Das ist die Voraussetzung dafür, daß die Integratorstufe des Pulsbreitendetektors 12 die zugeführten Phasenimpulse PHS über einen bezogen auf eine Bitzelle sehr langen Zeitraum integriert. Damit entspricht die Ladung am zweiten Kondensator C2 mit großer Näherung dem Mittelwert der Phasenunterschiede der Datenlesesignale DS2, wobei alle auf unterschiedliche Bitkombinationen der Dateninformation zurückzuführenden Phasenverzerrungen unterdrückt sind. Diese Maßnahme trägt wesentlich zur Stabilität des Regelkreises bei, da er sich durch kurzzeitige Störungen nicht selbst zu Schwingungen anregen kann. Die Maßnahme ist im vorliegenden Anwendungsfall auch zulässig, denn es sollen ja im Verhältnis zu der Länge einer Bitperiode langfristige Schwankungen der Spitzenwertverschiebung, die unter anderem auf Temperatureinflüsse zurückzuführen sind, ausgeregelt werden.

Am Signalausgang 122 des Pulsbreitendetektors 12 wird damit ein Analogsignal AS abgegeben, das der Momentanladung des zweiten Kondensators C2, d. h. dem Mittelwert der aktuellen Phasenablage der Datenlesesignale DS2 von der internen Taktimpulsfolge CLK entspricht.

In FIG 3 ist eine Reihe von Impulsdiagrammen dargestellt, die die Funktion der vorstehend beschriebenen Phasenmeßeinrichtung 12 illustrieren. In den Zeilen (a) und (b) sind die interne Taktimpulsfolge CLK bzw. Datenlesesignale DS2 beispielhaft dargestellt. Aus diesen dem Phasenkomparator 110 zugeführten Signalen wird das in Zeile (c) dargestellte vorauseilende Phasensignal LDS bzw. das in Zeile (d) dargestellte nacheilende Phasensignal LGS abgeleitet. Im Beispiel von FIG 3 tritt eine Rückflanke der internen Taktimpulsfolge CLK zu einem Zeitpunkt t1 auf, die entsprechende Flanke in der Folge der Datenlesesignale DS2 erscheint aber erst phasenverschoben zu einem Zeitpunkt t2. Damit ergibt sich beim vorauseilenden Phasensignal LDS von Zeile (c) ein Impuls mit entsprechender Impulsbreite. Der umgekehrte Fall ist für die Zeitpunkte t3 bzw. t4 angenommen. Hier ergibt sich aus dem voreilenden Datenlesesignal DS2 das in Zeile (d) dargestellte nacheilende Phasensignal LGS.

Aus der ODER-Verknüpfung der in den Zeilen (c) bzw. (d) dargestellten Phasensignale ergeben sich die in Zeile (e) dargestellten Phasenimpulse PHS. Entsprechend der beschriebenen Integratorfunktion des Pulsbreitendetektors 12 werden diese Phasensignale PHS in das Analogsignal AS umgesetzt. Im Beispiel ist angenommen, daß der zweite Kondensator C2 zum Zeitpunkt t1 im wesentlichen entladen ist, ein Zustand der vor allem bei der Inbetriebnahme des Magnetbandgerätes auftritt. Durch den zum Zeitpunkt t1 auftretenden Phasenimpuls PHS wird der Kondensator C2 bis zum Zeitpunkt t2 schnell aufgeladen. Aufgrund der Dimensionierung der Ausgangsstufe des Pulsbreitendetektors 12 sinkt die Amplitude des Analogsignales AS mit großer Zeitverzögerung danach nur langsam ab. Wenn dann zum Zeitpunkt t3 ein weiterer Phasenimpuls PHS auftritt, muß erst das erste RC-Glied R1, C1 auf einen entsprechenden Wert aufgeladen werden, um den zweiten Transistor leitend zu schalten und danach den zweiten Kondensator C2 bis zum Zeitpunkt t4 wieder auf einen Endwert aufzuladen, der der Pulsbreite des zugehörigen Phasenimpulses PHS entspricht.

In FIG 2 ist nun dargestellt, daß dieses Analogsignal AS einem Signaleingang 131 der Steuereinheit 13 für den Vormagnetisierungsstrom zugeführt wird. An diesen Signaleingang 131 ist ein invertierender Eingang eines Differenzspannungsverstärkers 132 angeschlossen, dessen nicht invertierender Eingang andererseits mit einer Referenzspannungsquelle 133 verbunden ist. Die Referenzspannungsquelle 133 wird bei der Montage des Magnetbandgerätes derart eingestellt, daß sie eine Referenzspannung REF vorbestimmter Amplitude abgibt. Der Differenzspannungsverstärker verstärkt die Differenz der beiden ihm zugeführten Signale und gibt ein entsprechendes Ausgangssignal ab.

Damit wird die Empfindlichkeit des Regelkreises für den Vormagnetisierungsstrom auf einen bestimmten Minimalwert der mittleren Phasenablage der Datenlesesignale eingestellt. Das heißt, die Regelschleife wird von Phasenablagen der Datenlesesignale DS2 unterhalb eines vorgegebenen Schwellenwertes überhaupt nicht beeinflußt, die Auswirkung des sogenannten "phase jitter" auf die Regelschleife wird damit vermieden.

Das Ausgangssignal des Differenzspannungsverstärkers 132 wird einem Analogintegrator 134 zugeführt. Dessen Gleichspannungsverstärkung $A_0$ ist derart dimensioniert, daß sich bei der angegebenen Übertragungsfunktion $h(S) = A_0 : S$, wobei S die Frequenz bezeichnet, das analoge Steuersignal BAS zum Einstellen des Vormagnetisierungsstromes mit einer entsprechend verstärkten Amplitude ergibt. Dieses Steuersignal wird über einen Signalausgang 135 der Steuereinheit 13 der Schreibelektronik 4 zugeführt.

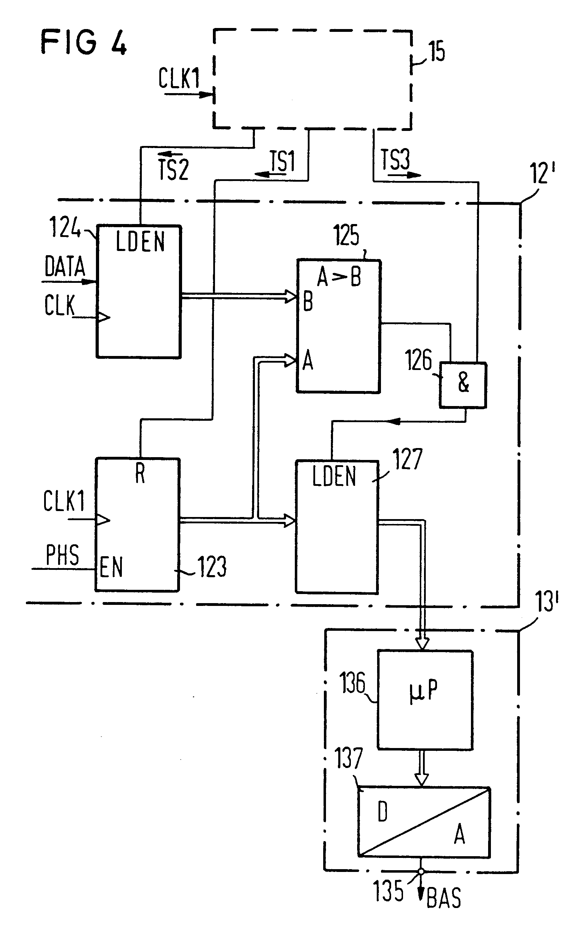

In einem weiteren Ausführungsbeispiel ist in FIG 4 eine Ausgestaltung der Phasenmeßeinrichtung 12 und der Steuereinheit 13 in digitaler Schaltungstechnik in Form eines Blockschaltbildes dargestellt. In magnetischen Speichergeräten laufen bekanntlich die einzelnen Prozeduren für die Signalverarbeitung der seriellen Dateninformation in einem vorgegebenen Zeitraster ab, das durch die sogenannte Bitzelle bestimmt ist, die ihrerseits durch eine vorbestimmte Anzahl von Perioden einer hochfrequenten internen Taktsignalfolge CLK1 definiert ist, deren Frequenz ein ganzzahliges Vielfaches der Frequenz der internen Taktsignalfolge CLK ist. In konventionellen Magnetschichtspeichergeräten werden Steuervorgänge in diesem Zeitraster durch Zeitsteuersignale TS festgelegt, die eine Zeitsteuereinheit 15 generiert. Zeitsteuereinheiten dieser Art sind dem Fachmann bekannt und nicht Teil der vorliegenden Erfindung. Hier sei nur summarisch angedeutet, daß die Zeitsteuereinheit 15 üblicherweise einen Binärzähler besitzt, der durch die hochfrequente interne Taktsignalfolge getriggert wird. Aus dem momentanen Zählerstand dieses Binärzählers werden die Zeitsteuersignale TS abgeleitet. In FIG 4 sind lediglich drei Zeitsteuersignale TS1 bis TS3 dargestellt, deren Funktion später erläutert wird.

Die in FIG 4 dargestellte Phasenmeßeinrichtung 12′ weist einen Binärzähler 123 als Pulsbreitendetektor auf, der von der hochfrequenten internen Taktimpulsfolge CLK1 getriggert wird. Eine Implementierungsmöglichkeit besteht darin, dem Binärzähler 123 die Phasenimpulse PHS als Freigabesignal für den Zählbetrieb zuzuleiten, dann zählt dieser Binärzähler im Takt der hochfrequenten internen Taktimpulsfolge CLK1 hoch, solange der hohe Pegel des Phasenimpulses anliegt. Eine mögliche Zählunschärfe, die in der Impulsfrequenz der hochfrequenten internen Taktimpulsfolge CLK1 begründet ist, spielt im vorliegenden Fall lediglich eine untergeordnete Rolle, da die Regelgröße für die Regelschleife hier aus den Mittelwerten der Phasenablagen abgeleitet wird. Wesentlich ist aber, daß der Binärzähler 123 zu Beginn einer jeden Bitzelle einen definierten Anfangszustand einnimmt. Dieser Anfangszustand wird über ein erstes Zeitsteuersignal TS1 eingestellt. Dieses Zeitsteuersignal soll beispielsweise am Ende einer Bitzelle von der Zeitsteuereinheit 15 abgegeben und dem Binärzähler 123 als Rücksetzsignal zugeführt werden. Damit ist sichergestellt, daß der Binärzähler 123 im Ablauf jeder Bitzelle einen Zählerstand auf, der der Pulsbreite des in dieser Bitzelle aufgetretenen Phasenimpulses PHS entspricht.

Die Phasenmeßeinrichtung 12′ besitzt außerdem ein Referenzregister 124. Im laufenden Betrieb des Magnetschichtspeichergerätes ist in diesem Register digital ein Wert gespeichert, der funktionell der Referenzspannung REF im vorstehend beschriebenen Ausführungsbeispiel entspricht. Dies heißt, der Speicherinhalt des Referenzregisters 124 definiert einen vorgegebenen Minimalwert für die Phasenablage. Das Referenzregister 124 könnte als Festwertspeicher oder aber, wie hier angenommen, als ladbares Register ausgebildet sein. Bei Inbetriebnahme des Magnetschichtspeichergerätes ist dann allerdings jeweils dieser Referenzwert neu zu laden.

In FIG 4 ist dies dadurch angedeutet, daß der Ladezustand des Referenzregisters 124 über ein weiteres Zeitsteuersignal TS2 eingestellt wird, so daß es, gesteuert durch die interne Taktimpulsfolge CLK seriell zugeführte Daten übernimmt. Dieses Datenwort kann dem Referenzregister 124 beispielsweise aus der Gerätesteuerung 3 zugeführt werden, es wäre ebenso aber auch denkbar, in einem Vorspann des Magnetbandes 7 das entsprechende Datenwort zu speichern und dem Referenzregister 124 dann über die Leseelektronik 9 und den Datendetektor 10 in Form von Datenlesesignalen zuzuführen.

Als Schwellwertschaltung für die Bewertung der Phasenimpulse PHS ist ein Digitalkomparator 125 vorgesehen, dessen erste Eingänge A parallel mit Ausgängen des Binärzählers 123 und dessen zweite Eingänge B mit Ausgängen des Referenzregisters 124 verbunden sind.

Sobald der Zählerstand des Binärzählers 123 den Speicherwert des Referenzregisters 124 übersteigt, gibt der Digitalkomparator 125 ein Ausgangssignal an ein UND-Glied 126 ab. Einem zweiten Eingang dieses UND-Gliedes ist ein weiteres Zeitsteuersignal TS3 zugeführt, für das lediglich die eine Bedingung gelten soll, daß es zeitlich kurz vor dem ersten Zeitsteuersignal TS1 auftreten soll. Damit liegt das dritte Zeitsteuersignal TS3 zu einem Zeitpunkt auf hohem Pegel, bei dem der Binärzähler 123 den etwa in der Mitte einer Bitzelle auftretenden Phasenimpuls PHS mit Sicherheit vollständig erfaßt hat, jedoch noch nicht zurückgesetzt ist.

Ist die UND-Bedingung für das UND-Glied 126 erfüllt, gibt es einen Freigabeimpuls an ein Zwischenspeicherregister 127 ab, dessen Eingänge parallel mit den Ausgängen des Binärzählers 123 verbunden sind. Damit wird dieses Zwischenspeicherregister immer dann kurz vor dem Ende der Bitzelle mit dem Wert des Zählerstandes des Binärzählers 123 geladen, falls dieser Wert den vorbestimmten Schwellenwert für eine Phasenablage überschreitet. Das Zwischenspeicherregister 127 bildet die Ausgangsstufe der Phasenmeßeinrichtung 12′, die über eine Mehrfachleitung an die Steuereinheit 13′ für den Vormagnetisierungsstrom angeschlossen ist.

Wie in FIG 4 schematisch angedeutet ist, enthält diese Steuereinheit 13′ als Kernstück einen Mikroprozessor 136, der im vorliegenden Ausführungsbeispiel im wesentlichen dazu dient, die momentanen Phasenablagen der Datenlesesignale DS2, dargestellt in Form des jeweiligen Speicherinhalts des Zwischenspeicherregisters 127, über eine Vielzahl von Bitzellen hinweg zu mitteln. Dies geschieht in Form einer digital ausgeführten Integration beispielsweise unter Verwendung einer Beziehung (1):

$$(1) \qquad Y(n) = Y(n-1) + X(n)$$

Dabei ist $Y(n)$ der Integrationswert zum Zeitpunkt einer n-ten Bitzelle, $Y(n-1)$ der entsprechende Integrationswert in der vorausgegangenen Bitzelle und $X(n)$ ein digitaler Wert, der der momentanen Phasenablage, d. h. dem Inhalt des Zwischenspeicherregisters 127 entspricht. Im vorliegenden Anwendungsfall ist n eine beliebige positive ganze Zahl. Derartige Integrationen, die auf fortgesetzte Addition zurückgeführt sind, sind dem Fachmann wohl bekannt und bedürfen daher hier keiner weiteren Erläuterung.

Zusätzlich zu dieser Integration kann es zweckmäßig sein, den Mikroprozessor 136 eine Verstärkung der Meßwerte rechnerisch durchführen zu lassen. Wie allgemein bekannt ist, läßt sich dies aufgrund einer Beziehung (2) erreichen:

$$(2) \quad Z(n) = K \times Y(n)$$

Dabei ist K ein konstanter vorgegebener Verstärkungsfaktor und $Z(n)$ in digitaler Form der verstärkte Momentanwert für die gemittelte Phasenablage.

Mikroprozessoren lassen sich relativ einfach programmieren und sind damit äußerst flexibel. Die beschriebenen Rechenoperationen für die Integration und Verstärkung des Integrationswertes sind daher lediglich mögliche Ausführungsformen, die aber ihren Zweck erfüllen. Im Rahmen des vorliegenden Konzeptes wäre es durchaus möglich, den Integrationszeitraum zu begrenzen und damit eine Bewertung der momentanen Phasenablage lediglich von Zeit zu Zeit als Diagnoseverfahren im laufenden Betrieb durchzuführen. Dabei wäre es auch denkbar, zusätzlich zu einer Integration und Verstärkung weitere Routinen anzuwenden, die beispielsweise momentane Phasenverzerrungen der gelesenen Datensignale DS2 aufgrund der vorliegenden Bitkombination und des Aufzeichnungsverfahrens berücksichtigen. In der aus Gründen der Klarheit vereinfachten Darstellung wird aber auf derartige zusätzliche Prozeduren nicht eingegangen, da diese, ohne die grundsätzliche Funktion zu beeinträchtigen, nicht unbedingt erforderlich sind.

Der vom Mikroprozessor 136 errechnete verstärkte Mittelwert für die Phasenablage wird einem Digital/Analogwandler 137 in Form eines Datenwortes zugeführt, der dieses in das analoge Steuersignal BAS zum Einstellen des Vormagnetisierungsstromes nach einer Beziehung (3) umsetzt:

$$(3) \quad W(n) = W_o + Z(n)$$

Dabei bezeichnet $W(n)$ die Momentanamplitude des Steuersignales BAS, $W_o$ einen nominalen Gleichspannungswert und $Z(n)$ den vom Mikroprozessor 136 übernommenen aktuellen Binärwert.

Um Realisierungsmöglichkeiten für das dem erfindungsgemäßen Verfahren zugrundeliegende Konzept zu illustrieren, wurde vorstehend jeweils ein Ausführungsbeispiel in analoger bzw. digitaler Schaltkreistechnik beschrieben. Es ist einleuchtend, daß die beschriebenen Ausführungsformen lediglich ausgewählte Beispiele für Implementierungen darstellen, die auch in anderer Form zu realisieren wären. So ist es wohl unmittelbar einleuchtend, daß beispielsweise auch eine gemischt analoge/digitale Implementierung in der Form möglich wäre, daß eine analoge Phasenmeßeinrichtung, wie anhand von FIG 2 beschrieben, mit einer digital ausgebildeten Steuereinheit 13' nach FIG 4 kombinierbar wäre. In diesem Fall müßte lediglich das von der Phasenmeßeinrichtung 12 abgegebene Analogsignal AS mit Hilfe eines Analog/Digitalwandlers in einen Binärwert umgesetzt werden, den man dann dem Mikroprozessor zuführt. Allerdings wäre es dann zweckmäßig, diesen dem Mikroprozessor zugeführten Binärwert vor einer Integration mit einem vorgegebenen Schwellenwert zu vergleichen. Damit wird dann ein zugeführter Binärwert nur dann bei der Integration berücksichtigt, wenn er einen vorgegebenen minimalen Phasenunterschied repräsentiert.

Die anhand von FIG 4 beschriebene Phasenmeßeinrichtung 12' benutzt als Ausgangsstufe ein Zwischenspeicherregister 127, das dem Mikroprozessor 130 ein vollständiges Binärwort zuführt. In Abwandlung dieser Implementierung wäre es aber auch denkbar, unter Verwendung eines Binärzählers 123 und des Referenzregisters 124 sowie eines Digitalkomparators 125 fortlaufend einen Vergleich des Zählerstandes mit dem Inhalt des Referenzregisters durchzuführen. Man könnte den Digitalkomparator 125 derart ausbilden, daß er im Takt der hochfrequenten internen Taktimpulsfolge CLK1 fortlaufend kurzzeitige Impulse immer dann abgibt, wenn der Zählerstand des Binärzählers 123 den Inhalt des Referenzregisters 124 übersteigt. Man könnte diese Ausgangssignale des Digitalkomparators auch dem Mikroprozessor 136 direkt zuführen. In diesem Fall müßte dann allerdings der Mikroprozessor diese Impulse für die Dauer einer Bitzelle aufaddieren, um so einen der momentanen Pulsbreite des bewerteten Phasenimpulses PHS entsprechenden Binärwert selbst zu generieren, bevor die beschriebene Integration und Verstärkung erfolgen kann.

Weiterhin wurde in den beschriebenen Ausführungsbeispielen ausführlich erläutert, daß das Steuersignal für die Anpassung des Vormagnetisierungsstromes nach unten begrenzt ist. Es wäre ohne weiteres denkbar und auch sinnvoll, ebenso einen oberen Schwellenwert einzuführen. Üblicherweise dürfte die Spitzenwertverschiebung einen oberen Mittelwert nicht überschreiten, solange das Aufzeichnungssystem, eingeschlossen das Magnetband, zuverlässig arbeitet.

Es wäre aber auch der Fall denkbar, daß das genannte Steuersignal bzw. die Spitzenwertverschiebung dennoch einen solchen oberen Schwellenwert übersteigt, dann aber muß ein Fehler vorliegen, z. B. das verwendete Magnetbandmaterial unzulässige Materialeigenschaften aufweisen. In einem solchen Fall könnte aus dem Steuersignal auch ein Fehlersignal abgeleitet werden.

Schließlich sei nochmals darauf verwiesen, daß nicht etwa allein nur der Vormagnetisierungsstrom einstellbar sein muß. Im Rahmen des Gesamtkonzeptes wäre es durchaus denkbar, bei einem fest vorgegebenen Verhältnis von Datenschreibstrom und Vormagnetisierungsstrom den resultierenden Schreibstrom in Abhängigkeit von dem genannten Steuersignal anzupassen.

Diese Beispiele zeigen, daß im Rahmen der Erfindung eine Vielzahl von Ausgestaltungen denkbar sind und verdeutlichen, daß die Erfindung selbst keineswegs auf die beschriebenen Ausführungsformen beschränkt ist.

## Patentansprüche

1. Verfahren zum Aufzeichnen von Dateninformation auf einen magnetischen Aufzeichnungsträger (7) mit Hilfe eines magnetischen Schreibkopfes (5) und eines diesem vorgeschalteten, regelbaren Schreibverstärkers (4), dem die Dateninformation in Form von binären Datensignalen (DS1) sowie diese überlagernden Vormagnetisierungssignalen (BS) zugeführt werden, **dadurch gekennzeichnet,** daß die aufgezeichneten Signale unmittelbar nach dem Aufzeichnen wieder gelesen werden, daß die Spitzenwertverschiebung der so gewonnenen Lesesignale (DS2) gemessen wird und daß die Amplituden der binären Datensignale (DS1) und/oder der Vormagnetisierungssignale (BS) in Abhängigkeit von der gemessenen Spitzenwertverschiebung zum Erzielen eines optimalen Verhältnisses von Lesesignalamplitude und minimaler Spitzenwertverschiebung nachgeregelt wird.

2. Verfahren nach Anspruch 1, **dadurch gekennzeichnet,** daß die gemessene Spitzenwertverschiebung mit einem vorgegebenen Referenzwert (REF) verglichen wird und daß der Regelvorgang nur dann eingeleitet wird, wenn der Meßwert für die Spitzenwertverschiebung diesen Referenzwert überschreitet.

3. Verfahren nach Anspruch 1 oder 2, **dadurch gekennzeichnet,** daß die Meßwerte für die Spitzenwertverschiebung über einen vorgegebenen Zeitraum gemittelt werden und daß der sich dabei ergebende Mittelwert den momentanen Istwert für den Regelkreis bildet.

4. Schaltungsanordnung zum Durchführung eines Verfahrens nach einem der Ansprüche 1 bis 3, **gekennzeichnet durch** einen Phasenkomparator (110), dem als Vergleichssignale aufbereitete Lesesignale (DS2) sowie eine interne Taktsignalfolge (CLK) zugeführt werden und der Phasenimpulse (PHS) erzeugt, deren Impulsbreite der momentanen Phasendifferenz der Vergleichssignale entspricht, durch eine an den Phasenkomparator angeschlossene Meßeinrichtung (12) zum Messen der Impulsbreite der Phasenimpulse, die ein Ausgangssignal (AS) erzeugt, dessen Amplitudenwert der gemessenen Phasendifferenz entspricht und durch eine an die Meßeinrichtung angeschlossene Steuereinheit (13) zum Umsetzen des Ausgangssignales der Meßeinrichtung in ein Steuersignal (BAS), das als Regelsignal dem Schreibverstärker (4) zugeführt wird.

5. Schaltungsanordnung nach Anspruch 4, **dadurch gekennzeichnet,** daß die Meßeinrichtung (12) als analoger Pulsbreitendetektor ausgebildet ist, der zum Bilden eines Mittelwertes der Spitzenwertverschiebung aus den zugeführten Phasenimpulsen (PHS) eine Integratorstufe (R3, C2) aufweist.

6. Schaltungsanordnung nach Anspruch 5, **dadurch gekennzeichnet,** daß der Pulsbreitendetektor (12) ein Eingangsnetzwerk (T1, R1, C1), dem die Phasenimpulse (PHS) an einem Signaleingang(121) zugeführt werden und in dem ein Serienschwingkreis (R1, C1) zwischen dem Signaleingang und Masse angeordnet ist sowie ein die Integratorstufe bildendes Ausgangsnetzwerk (T2, R2, R3, C2) aufweist, das eine als Emitterfolger geschaltete Transistorstufe (T2, R2) besitzt, die an einen Mittelabgriff des Serienschwingkreises angeschlossen ist und in dem den Signalausgang bildenden Emitterzweig einen an Masse liegenden Parallelschwingkreis (R3, C2) aufweist.

7. Schaltungsanordnung nach Anspruch 4, **dadurch gekennzeichnet,** daß die Meßeinrichtung (12') in digitaler Schaltkreistechnik ausgebildet ist, in der ein Binärzähler (123) als Pulsbreitendetektor für die Phasenimpulse (PHS), ein Register (124) zum Speichern eines Referenzwertes für eine vorgegebene, minimale Phasendifferenz, ein Digitalkomparator (125), der eingangsseitig mit dem Referenzregister einerseits und dem Binärzähler andererseits verbunden ist und Schaltmittel (z. B. 127) vorgesehen sind, mit denen bei einem den Referenzwert übersteigenden Zählerstand des Binärzählers an einem Signalausgang der Meßeinrichtung der Zählerstand des Binärzählers als Binärwert bzw. in Form einer Impulsfolge ausgegeben wird.

8. Schaltungsanordnung nach Anspruch 7, **dadurch gekennzeichnet,** daß die Schaltmittel (126, 127) ein Zwischenregister (127) umfassen, in dem der die jeweilige Phasendifferenz repräsentierende Zählerstand des Binärzählers (123) mit der Nebenbedingung zwischengespeichert wird, daß der Vergleich mit dem Referenzwert ergibt, daß die Phasendifferenz den vorgegebenen Minimalwert übersteigt.

9. Schaltungsanordnung nach einem der Ansprüche 4 bis 6, **dadurch gekennzeichnet,** daß in der Steuereinheit (13) eine Referenzspannungsquelle (133), die eine einstellbare, einer vorgegebenen minimalen Phasendifferenz entsprechende Referenzspannung (REF) abgibt, ein Summierglied (132) zum Bilden der Differenz zwischen dem der gemessenen Phasendifferenz entsprechenden Ausgangssignal (AS) der Meßeinrichtung (12) und der Referenzspannung sowie ein Analogintegrator (134) zum Integrieren und gegebenenfalls Verstärken des vom Summierglied abgegebenen Ausgangssignales und damit zum Generieren des als Regelsignal abgegebenen Steuersignales (BAS) vorgesehen sind.

10. Schaltungsanordnung nach einem der Ansprüche 4 bis 8, **dadurch gekennzeichnet,** daß die Steuereinheit (13') einen Mikroprozessor (136) zum Errechnen eines dem Regelsignal (BAS) entsprechenden Digitalwertes aus dem der Steuereinheit zugeführten Ausgangssignal (AS), gegebenenfalls nach Umsetzen in einen Binärwert, nach einem vorgegebenen Algorithmus zur Integration und Verstärkung dieses Ausgangssignales sowie einen an den Mikroprozessor angeschlossenen Digital/Analogwandler (137) zum Umwandeln des vom Mikroprozessor abgegebenen Digitalwertes in ein analoges Steuersignal (BAS) zum Regeln des Schreibverstärkers (4) umfaßt.

## Claims

1. A method of recording information on a magnetic medium (7) using a magnetic recording head (5) downstream of an adjustable record amplifier (4) to which the information is supplied in the form of binary data signals (DS1) and overlapping premagnetisation signals (BS), characterised in that the recorded signals are re-read immediately after recording, the peak-value displacement of the resulting playback signals (DS2) is measured and the amplitudes of the binary data signals (DS1) and/or of the premagnetisation signals (BS) are re-adjusted in dependence on the measured peak-value shift in order to obtain an optimum ratio between the playback-signal amplitude and the minimum peak-value shift.

2. A method according to claim 1, characterised in that the measured peak-value shift is compared with a preset reference value (REF) and the adjustment process is initiated only when the measured value for the peak-value shift exceeds the reference value.

3. A method according to claim 1 or 2, characterised in that the measured values for the peak-value shift are obtained during a preset time and the resulting average value constitutes the instantaneous actual value for the control loop.

4. A circuit arrangement for working a method according to any of claims 1 to 3, characterised by a phase comparator (110) supplied with comparison signals in the form of processed playback signals (DS2) and an internal clock-signal sequence (CLK) and generating phase pulses (PHS) having a width corresponding to the instantaneous phase difference between the comparison signals, and also characterised by a measuring device (12) connected to the phase comparator for measuring the width of the phase pulses and generating an output signal (AS) having an amplitude corresponding to the measured phase difference and also characterised by a control device (13) connected to the measuring device so as to convert the output signal from the measuring device into a control signal (BAS) supplied as a regulating signal to the record amplifier (4).

5. A circuit arrangement according to claim 4, characterised in that the measuring device (12) is in the form of an analog pulse width detector comprising an integrator stage (R3, C2) for forming an average value of the peak-value shift from the supplied phase pulses (PHS).

6. A circuit arrangement according to claim 5, characterised in that the pulse-width detector (12) comprises an input network (T1, R1, C1) supplied with the phase pulses (PHS) at a signal input (121) and containing a series resonant circuit (R1, C1) between the signal input and earth and an output circuit (T2, R2, R3, C2) forming the integrator stage and comprising a transistor stage (T2, R2) wired as an emitter follower and connected to a central tap of the series resonant circuit and containing an earthed parallel resonant circuit (R3, C2) in the branch of the emitter forming the signal output.

**7.** A circuit arrangement according to claim 4, characterised in that the measuring device (12') is constructed in digital circuit technology, in which a binary counter (123) for detecting the width of the phase pulses (PHS) is provided together with a register (124) for storing a reference value for a preset minimum phase difference, a digital comparator (125) connected at the input side to the reference register on the one hand and the binary counter on the other hand, and circuit elements (e.g. 127) for delivering the level of the binary counter as a binary value in the form of a pulse sequence at a signal output of the measuring device when the level of the binary counter exceeds the reference value.

**8.** A circuit arrangement according to claim 7, characterised in that the circuit elements (126, 127) comprise an intermediate register (127) in which the level of the binary counter (123) representing the respective phase difference is temporarily stored, subject to the additional condition that the comparison with the reference value shows that the phase difference exceeds the preset minimum value.

**9.** A circuit arrangement according to any of claims 4 to 6, characterised in that the control unit (13) comprises a reference voltage source (133) delivering an adjustable reference voltage (REF) corresponding to a preset minimum phase difference, a summing element (132) for forming the difference between the reference voltage and the output signal (AS) of the measuring device (12) corresponding to the measured phase difference, and an analog integrator (134) for integrating and optionally amplifying the output signal from the summing element and consequently generating the regulating signal in the form of the delivered control signal (BAS).

**10.** A circuit arrangement according to any of claims 4 to 8, characterised in that the control unit (13') comprises a microprocessor (136) for calculating a digital value corresponding to the regulating signal (BAS) from the output signal (AS) supplied to the control unit, optionally after conversion into a binary value, in accordance with a preset algorithm for integrating and amplifying this output signal, and a digital/analog converter (137) connected to the microprocessor for converting the digital value delivered by the microprocessor into an analog control signal (BAS) for regulating the record amplifier (4).

**Revendications**

**1.** Procédé d'enregistrement d'information de données sur un support magnétique d'enregistrement (7) à l'aide d'une tête magnétique d'écriture (5) et d'un amplificateur d'écriture réglable (4) monté en amont de celle-ci auquel l'information de données est envoyée sous forme de signaux binaires (DS1) ainsi que de signaux de préaimantation (BS) superposés à ceux-ci, caractérisé par le fait que les signaux enregistrés sont lus immédiatement après l'enregistrement, que le décalage de la valeur de crête des signaux de lecture ainsi obtenus (DS2) est mesuré et que l'amplitude des signaux binaires (DS1) et/ou des signaux de préaimantation (BS) est réajustée en fonction du décalage mesuré de la valeur de crête pour l'obtention d'un rapport optimal entre l'amplitude des signaux de lecture et le décalage minimal de la valeur de crête.

**2.** Procédé selon la revendication , caractérisé par le fait que le décalage mesuré de la valeur de crête est comparé à une valeur de référence fixée (REF) et que le processus de réglage n'est déclenché que lorsque la valeur mesurée du décalage de la valeur de crête dépasse cette valeur de référence.

**3.** Procédé selon l'une des revendications 1 et 2, caractérisé par le fait qu'il est établi la moyenne sur une période fixée des valeurs mesurées du décalage de la valeur de crête et que cette moyenne constitue la valeur instantanée pour la boucle de régulation.

**4.** Dispositif de montage pour la mise en oeuvre d'un procédé selon l'une des revendications 1 à 3, caractérisé par un comparateur de phase (110) auquel sont envoyés des signaux de lecture (DS2) préparés comme signaux de comparaison ainsi qu'un train interne d'impulsions d'horloge (CLK) et qui produit des impulsions de phase (PHS) dont la largeur correspond à la différence instantanée de phase des signaux de comparaison, par un dispositif de mesure (12) relié au comparateur de phase pour la mesure de la largeur des impulsions de phase, qui produit un signal de sortie (AS) dont l'amplitude correspond à la différence de phase mesurée, et par un bloc de commande (13) relié au dispositif de mesure pour la transformation du signal de sortie de celui-ci en un signal de commande (BAS) qui est envoyé comme signal de réglage à l'amplificateur d'écriture (4).

**5.** Dispositif de montage selon la revendication 4, caractérisé par le fait que le dispositif de mesure (12) est constitué d'un détecteur analogique de largeur d'impulsion qui présente un étage intégrateur (R3, C2) pour l'établissement d'une valeur moyenne du décalage de la valeur de crête à partir des impulsions de phase envoyées (PHS).

**6.** Dispositif de montage selon la revendication 5, caractérisé par le fait que le détecteur de largeur d'impulsion (12) présente un réseau d'entrée (T1, R1, C1) auquel les impulsions de phase (PHS) sont envoyées à une entrée de signal (121) et dans lequel un circuit oscillant série (R1, C1) est monté entre l'entrée de signal et la masse, et un réseau de sortie (T2, R2, R3, C2) qui forme l'étage intégrateur et comporte un étage à transistor (T2, R2) monté en émetteur-suiveur qui est connecté à une prise médiane du circuit oscillant série et dans lequel la branche émetteur formant la sortie de signal présente un circuit oscillant parallèle (R3, C2) mis à la masse.

**7.** Dispositif de montage selon la revendication 4, caractérisé par le fait que le dispositif de mesure (12') est conçu en technique de circuit de commutation numérique dans laquelle sont prévus un compteur binaire (123) comme détecteur de la largeur des impulsions de phase (PHS), un registre (124) pour la mémorisation d'une valeur de référence d'une différence de phase minimale fixée, un comparateur numérique (125) qui est relié du côté entrée d'une part au registre de référence et d'autre part au compteur binaire, et des moyens de commutation (par exemple 127) avec lesquels, dans le cas d'un état du compteur binaire dépassant la valeur de référence, cet état est émis sous forme de valeur binaire ou sous la forme d'un train d'impulsions à une sortie de signal du dispositif de mesure.

**8.** Dispositif de montage selon la revendication 7, caractérisé par le fait que les moyens de commutation (126, 127) comprennent un registre intermédiaire (127) dans lequel l'état du compteur binaire (123) représentant la différence de phase est mémorisé de manière intermédiaire à la condition secondaire que la comparaison à la valeur de référence donne comme résultat que la différence de phase dépasse la valeur minimale fixée.

**9.** Dispositif de montage selon l'une des revendications 4 à 6, caractérisé par le fait que dans le bloc de commande (13) sont prévus une source de tension de référence (133) qui émet une tension de référence (REF) réglable correspondant à une différence de phase minimale fixée, un sommateur (132) pour la formation de la différence entre le signal de sortie (AS) du dispositif de mesure (12) correspondant à la différence de phase mesurée et la tension de référence, et un intégrateur analogique (134) pour l'intégration et éventuellement l'amplificateur du signal de sortie émis par le sommateur et ainsi la production du signal de commande (BAS) émis comme signal de réglage.

**10.** Dispositif de montage selon l'une des revendications 4 à 8, caractérisé par le fait que le bloc de commande (13') comprend un microprocesseur (136) pour le calcul d'une valeur numérique correspondant au signal de réglage (BAS) à partir du signal de sortie (AS) envoyé au bloc de commande, éventuellement après transformation en une valeur binaire, selon un algorithme fixé pour l'intégration et l'amplification de ce signal de sortie, et un convertisseur numérique-analogique (137) relié au microprocesseur pour la conversion de la valeur numérique émise par le microprocesseur en un signal analogique de commande (BAS) pour le réglage de l'amplificateur d'écriture (4).

FIG 1

## FIG 2

## FIG 3

FIG 4